# EUROPEAN PATENT SPECIFICATION

(11) **EP 0 813 739 B1**
(45) Date of publication and mention of the grant of the patent: **14.05.2003**
(21) Application number: 96908632.1
(22) Date of filing: 04.03.1996
(51) Int. Cl.: G11B 7/00, G11B 5/09, H04N 5/76

(54) **METHOD AND MEANS FOR CHANGING PIT DEPTH ON AN OPTICAL RECORDABLE MEDIUM**
VERFAHREN UND VORRICHTUNG ZUR VERÄNDERUNG DER PIT-TIEFE AUF EINEM OPTISCH BESCHREIBBAREN MEDIUM
PROCEDE ET MOYENS POUR MODIFIER LA PROFONDEUR DES CUVETTES SUR UN SUPPORT OPTIQUE ENREGISTRABLE

(30) Priority: 08.03.1995 US 400671; 08.03.1995 US 400672
(43) Date of publication of application: 29.12.1997
(73) Proprietor: OPTICAL DISC CORPORATION, Santa Fe Springs California 90670 (US)
(72) Inventor: BROWNE, John, F., Laguna Niguel, CA 92677 (US); WILKINSON, Richard, L., La Mirada, CA 90658 (US); BOYLE, William, W., Covina, CA 91722 (US); RILUM, John, H., Tustin, CA 92680 (US); LI, Shigang, Norwalk, CA 90650 (US)
(74) Representative: Kensett, John Hinton
(86) International application number: US9602931
(87) International publication number: WO96027879

(56) References cited:
- US-A- 4 162 398
- US-A- 4 225 873
- US-A- 4 419 750
- US-A- 4 937 809
- US-A- 5 297 129

## Description

### BACKGROUND OF THE INVENTION

### Field of the Invention

The present invention relates to the field of signal processing systems, and in particular to the field of waveform shaping in optical information recording systems. More specifically, the present invention relates to a dynamic optical modulator regulator and waveform shaping system employed in an optical disc mastering apparatus for improving the character and resolution of the indicia in a replicated optical disc while maintaining proper duty cycle and asymmetry of the recorded information. The present invention also provides a method and means for recording an auxiliary channel of input information in the depth or height of surface discontinuities in the recordable surface of a recordable medium.

### Brief Description of the Prior Art

A great many systems are known for optically recording information on light responsive media. Digital information as well as analog information can be recorded on a variety of media, including photoresists, photochromic materials, and thermally responsive materials in the form of discs, drums, and tape.

Virtually all of these known systems employ some form of pulse code modulation (PCM) or frequency modulation (FM) due to the nonlinearities of known optical recording media. Additionally, virtually all of these known systems employ an optical system including an objective lens for focusing the writing beam of light to a small spot on the light sensitive surface of the medium. In order to maximize the information density of the recorded material, it is necessary to focus the writing beam to the smallest possible spot size. Due to diffraction effects, a focussed beam of coherent radiation forms a central bright spot surrounded by concentric spaced rings of light known as an Airy disc, having an approximately Gaussian power distribution. The diameter of the central spot of light is defined by the wavelength of the recording light and the numerical aperture (NA) of the objective lens.

Most optical recording media exhibit a threshold effect, meaning that a level of laser writing beam power density exists above which the medium will be altered, and below which the medium will not be altered. Since the power density of the focussed writing beam varies as a function of the distance from the center of the central spot, it is possible to form altered areas on a medium which are smaller than the diameter of the central spot of the focussed light. In order to obtain an altered area of a specific size, the prior art has taught that it is merely necessary to adjust the peak intensity of the modulated beam such that the power density of the focussed spot at the specified diameter is equal to threshold level of the recording medium. Experimental results indicate that this technique works extremely well when there is no relative movement between the writing spot and the medium and no thermal conductivity effects diffusing the energy absorbed by the medium. In all practical systems, however, relative movement between the medium and the recording spot is necessary. This relative movement greatly complicates the calculation of the amount of energy absorbed by a particular region of the medium.

All light responsive media exhibit a tendency to integrate the amount of energy received over a period of time, so that the threshold level of the material does not define a specific instantaneous power density at which the material is altered, but rather defines an energy density which is the result of an integration of the received power over the time during which the power is received. In other words, the threshold level for the materials is actually an exposure level. Exposure level is defined as the radiant flux per unit area integrated over the exposure time. The radiant flux irradiating a particular point on the medium at a particular time is a function of the position of the point within the focussed spot, as well as the instantaneous modulation level of the writing beam. Specifically, the exposure level at a particular point on the medium is equal to the convolution integral of the instantaneous power of the modulated writing beam as a function of time and the power density distribution function defined by the path and speed of the particular point of the medium through the focussed spot, evaluated over the exposure time. Since the power distribution of the focussed spot varies in two dimensions, the exposure level over the medium defines a three dimensional graph. The intersection points of this graph with a planar "slice" through the graph at the altitude corresponding to the threshold level of the medium maps the boundaries of the altered areas on the medium.

An important concept in determining the effect of the finite size of the recording spot is the concept of the spatial frequency of the information on the moving recording medium (in this description, it is to be understood that the movement of the recording medium is relative to the write or read head of an optical recorder or player. That is, the medium may be a stationary card writen on and read by a moving optical head). This is the subject of U.S. Patent No. 4,616,356 which is incorporated herein by reference.

Also incorporated herein by reference is U.S. Patent No. 4,225,873 describing signal processing techniques to achieve proper duty cycle of the recorded information and to minimize second harmonic distortion of the recorded information which are related parameters and which are improved by the present invention. In this description, the duty cycle of the recorded information will be referenced in detail, it being understood that second harmonic distortion is proportional thereto. That is, when duty cycle is controlled to approximately 50%, this minimizes the second harmonic distortion of the recorded information.

As previously indicated, when recording on a medium using laser light, the effects of the recording process may either be an ablation of the recording surface, a discoloration of the surface, a photo-hardening or a photo-softening of a photoresist coated surface, a raised bump or bubble formation, and the like. In all cases, a recording medium is moving relative to an impinging light beam, and the energy of the light beam is increased and decreased about a threshold level so as to cause or not cause the desired effect, respectively. Also in all cases, when the light beam is first turned on or caused to exceed threshold, the full effect of the energy on the recording surface is not instantaneously realized. Rather, and especially with media that are thermally responsive, the recorded effect (i.e., indicia) increases with time due primarily to the temperature of the medium increasing with time under the influence of the applied energy. That is, when the light beam is first turned on, instantaneously no alteration in a moving recording surface can be detected. If left on continuously, the full effect of the impinging light beam will cause a wide stripe of the effect on the recording surface, thereby defining a broadening of the track of the light beam with the passage of time.

on the other hand, when the light beam is turned off or falls below threshold level, the effect of the lack of sufficient energy from the light beam is almost immediately recognized by the disc surface, since the downstream portion of the disc is cold and unaltered. Accordingly, when the light beam is turned off quickly, an almost instantaneous stoppage of the recording effect takes place, and since the light beam is substantially circular at the point of impingement on the recording surface, a rather blunt end on the trailing edge of the recorded indicia can be observed.

If the moving recording surface is therefore impinged by a light beam having a sharp rising leading edge and a sharp falling trailing edge, a rather "pear-shaped" or "teardrop-shaped" surface effect will be noted, the leading edge being tapered and widening to a constant width until the beam was shut off, at which point the recorded effect would define a rounded or blunted trailing end. This aspect of optical disc recording is the subject of U.S. Patent No. 5,297,129 which is incorporated herein by reference.

While the aforementioned characteristics of the recorded surface results regardless of the recording "effect" chosen, for ease of discussion in this description, it will be assumed that the recording light beam causes an ablation of the surface, thereby producing a "pit". It is to be understood, however, that a bump, discoloration, photoresist hardening, photoresist softening, or other indicia can be substituted for the term "pit" without departing from the nature of the technical description of the recording effect. It is further to be recognized that the term "pit" as used herein would be equivalent to the bump or pit formed after development of a photoresist if that were chosen for the recording surface. For the purposes of discussion herein, the term "surface discontinuity" will be used as a generic term meaning either a bump or a pit or other surface disturbance departing from a flat unrecorded disc surface. Finally, the term "recording surface" refers to that part of the disc which is sensitive to the impingement of light energy, whether it be on the outer surface of the disc or submerged beneath the surface being impinged by the light beam. Although it would be theoretically possible to apply some of the concepts of the present invention to all types of prior art mastering processes, from a practical viewpoint only recording processes which create physical "pits" or "bumps" will benefit, as will only mastering systems that permit direct-read-after-write (DRAW) disc mastering. Thus, photoresist type mastering systems cannot make use of the invention. This will be detailed later in this description.

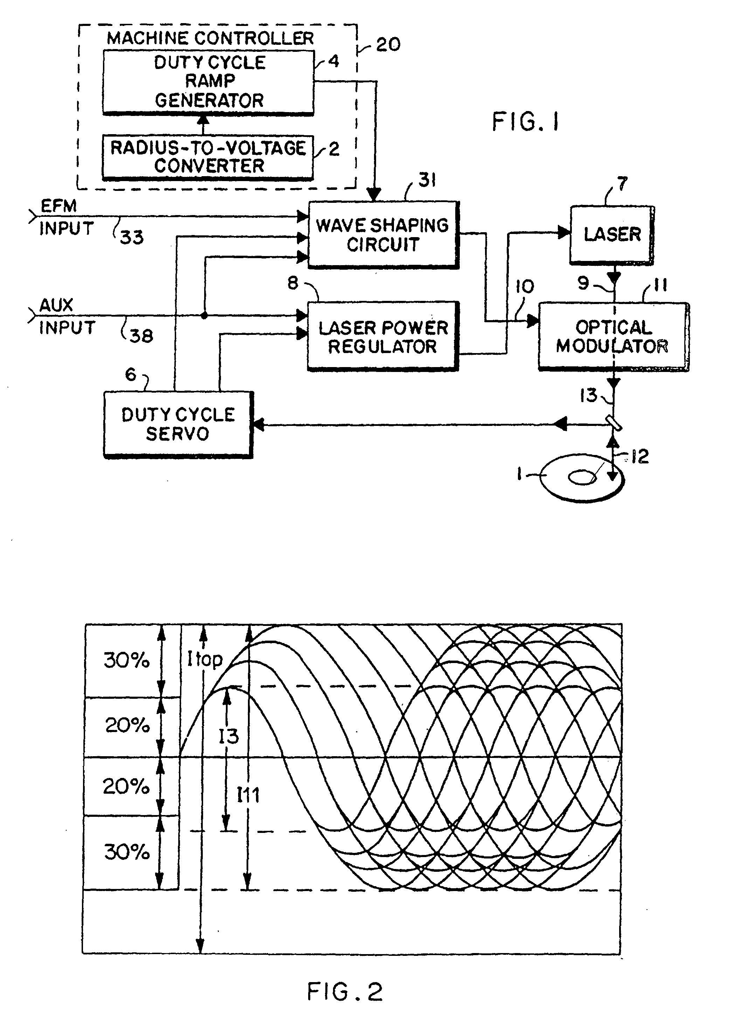

One of the most important parameters in the recording of a compact disc (CD) master is the precise control of the pit-to-land ratio. Each transition from land to pit and vice versa marks a zero crossing of the EFM (Eight-to-Fourteen Modulation) signal; therefore, the size of the land area holds as much digital information as the size of the corresponding pits. The average ratio of pit length to pit plus land length is the "duty cycle" of the recording. A duty cycle of 50% would represent a symmetrical signal with pits occupying 50% of the track area and land area the other 50%. Any recording that deviates from a 50% duty cycle would be represented in an eye-pattern (discussed in connection with Figure 2) as an asymmetrical signal. Due to limitations in the replication process, differences in the various CD player's optics, and variances in the electronic boost of the CD players, all CD recordings, even ones that were recorded with perfect 50-50 symmetry, may be seen by the playback optics as slightly asymmetrical. Circuitry within the CD player corrects for this asymmetry by shifting the "zero level" to a point where no timing differences between positive and negative half cycles exist on the average.

The optical head of a player "reads" the information on a disc by focusing a laser beam to a spot about 1micron in diameter and scanning this spot along a spiral track of pits and lands on the disc. The lands reflect most of the light back to a photodetector in the head, but the pits (actually read by the read laser from the opposite side of the disc where the pits are seen as bumps) reflect little light back toward the read head. The photodetector generates an electrical signal proportional to the amount of light reflected by the area of the disc illuminated by the spot. Because the spot is nearly diffraction limited and is only slightly larger in diameter than the length of the shortest length pit on the disc, the rise and fall times of the electrical signal are relatively rather slow, and the amplitude of the signal representing the smallest length pits is smaller than the amplitude of the signals representing the longer pits. The difference in amplitude varies from player to player because of differences in optical quality, and from disc to disc because of pit geometry. All players partially make up the difference in amplitude with an analog aperture compensation circuit which boosts the amplitude of the high frequency signals relative to the low frequency signals. Unfortunately, in the interests of economy, these boost circuits are not phase linear, so the harmonics of the signals are delayed by varying amounts, and the shape of the waveform is altered in addition to its amplitude.

The EFM signal recorded on a compact disc is a run length limited digital code which is self clocking and contains its digital information in the timing between transitions. On the disc, such transitions are the boundaries between pits and lands between pits, and vice versa. Therefore, the length of each pit is a quantum of data and the length of each land between pits is also a quantum of data.

The rules for the EFM code according to CD standards require that each and every transition occur at one of nine allowed times after the last transition. More specifically, the period between any two transitions must be nT, where T is a fixed period of time (about 231 nanoseconds) and n is an integer between 3 and 11. In order to decode the information, the player must decide how many T's pass between each transition. The rate of rotation of the disc under the playback head is not stable enough to simply time the transitions with a fixed clock. Instead, a channel clock running at an average of one cycle per T (4.3218 MHz) is phase locked to the recovered signal. This PLL (phase locked loop) operates by comparing the timing of each transition in the signal with the closest cycle end of the clock. If the transition consistently occurs just before a cycle end of the clock, the clock slowly speeds up until the transitions occur exactly at a cycle end.

Unfortunately, the rise and fall times of the analog signal from the disc are relatively long and may exceed T, such that a specific voltage must be chosen to define the instant of the transition. This voltage is the player's "Decision Level". The player chooses this level with the help of another rule of the EFM code which states that, on the average (and ideally), the EFM signal will be "high" for exactly the same amount of time it is low. Knowing this, if a player picks a decision point too high in voltage, the EFM signal will be low (lower than the decision point) more often than it is high (higher than the decision point). A servo loop in the player slowly adjusts the limit voltage to find and maintain the proper decision level voltage.

It is important to realize that the player cannot change its decision level on a cycle by cycle basis, but the period between the transitions can vary from 3T to 11T instantly. Any frequency dependent influences on the shape of the waveform may cause the ideal decision point for the high frequency segments of the signal to be at a different voltage than the ideal decision point for the low frequency segments of the signal. The player will choose a decision point which is an average of these voltages. As mentioned earlier, the boost circuitry of the player is not phase linear and therefore causes a "spread" in the ideal decision point voltages with frequency.

In order to read the signal from the disc, the player must keep the small spot of light centered over the moving spiral track of pits on the disc. Various techniques are used for detecting the position of the spot relative to the track, and tracking devices of some players (using single-beam or push-pull trackers) are greatly influenced by the average duty cycle of the pits along the track. That is, these players will only reliably follow along the center of the track if the track consists of a certain percentage of pit area greater than the land area (a duty cycle greater than 50%). While recorded intelligence information is contained in both the pits and the lands, no tracking information is contained in the lands which are coplanar with the other unrecorded regions of the disc surface, i.e., the surface of the disc between tracks of pits. Accordingly, the greater the length of the pit relative to the land between pits, the better the tracking subsystem works. As indicated, with any duty cycle less than about 50%, there is insufficient tracking information to enable push-pull trackers to stay on track. One solution to this dilemma, then, would be to increase the pit-to-land duty cycle to above 50% and rely upon the player's ability to readjust its "decision level" to compensate for the increase in recorded duty cycle. However, in order for the player's PLL to maintain a channel clock based on the EFM signal, the increase in the duty cycle must be uniform over the entire signal, but this does not happen because there is not an equal proportional increase in pit length over the nine different pit sizes (3T to 11T). A 3T pit will obviously have a greater geometric increase, percentage wise, than will a 6T or an 11T pit. Unfortunately, therefore, departing from a 50% duty cycle just to accommodate single-beam trackers sacrifices symmetry, and if asymmetry is too great, the player's phase lock loop may not be able to lock to the recovered signal.

Another consideration which has heretofore not been adequately provided for in the recording process is the fact that single-beam players, which tracking function depends on the amount of light deflected back to the photosensor in the direction of the tracking error, operate best with tapered (pointed) ends on the pits formed in the recording surface. The ideal pit would be an elongated groove with an apex on the bottom of the pit, similar to the impression that would be made by an upside down pyramid. The more the slope of the sides and the more tapered the ends, the better. Accordingly, any attempt to improve the pit definition tends to create a flat plateau region and eliminate the long narrow and tapered leading edges of the pits making tracking more difficult for such single-beam players. Moreover, pit length varies greatly pit-to-pit, i.e., from 3T to 11T, and a 3T width pit or land can be placed directly adjacent to an 11T pit or land. If the peak power level is increased to produce rounded (less tapered) higher definition 3T pits, the same peak power level applied when forming an 11T pit would produce a very wide or blunted trailing end portion. This difference in geometry between 3T and 11T pits creates differential symmetry in which the 3T pits have one symmetry and the 11T pits have another symmetry configuration, and this consequently causes problems with player decoders. Ideally, there should be the same symmetry on each pit size. Otherwise, there will be a "spread in pattern" in the eye-pattern (discussed in connection with Figure 2).

There is yet another phenomenon which contributes to degraded optical disc replicas, and that concerns the variation of pit depth as a function of radius. It has been determined that even with a "perfect" stamper, pit depth in a replica varies according to radius apparently due to the lack of proper temperature and pressure at larger radii, the pits becoming shallower toward the outer edge of the replica.

Yet another phenomenon is the fact that, strictly due to the molding process, 3T pits have a greater depth than 4T pits which have a greater depth than 5T pits, and so on, independent of radius; and this is found to be true even when the bumps on the stamper have uniform heights for all pulse widths 3T-11T, i.e., the pits in the molded replica do not reflect the exact geometry of the bumps on the stamper. This phenomenon thus compounds the problem of attempting to maintain uniform pit depth when also considering the known pit depth variation caused by surface temperature differences for different length pulses during the mastering process as noted in the previous paragraph. This pit length related depth difference is significantly large between 3T and 4T pits and also between 4T and 5T pits. However, the depth difference is less significant between 5T through 11T pits. Ideally, all pits should be of the same depth.

It can therefore be appreciated that without the background knowledge discussed above, a simplistic master recorder design would simply maintain a 50% duty cycle in the recorded information. In the ideal world, this would seem to be an obvious thing to do, since maintaining a 50% duty cycle would appear to be an essential requirement for the recording process. Methods and apparatuses of the distant prior art have thus merely provided a rectangular waveform in which the portion representing an nT length pit is equal in length to that portion of the waveform representing an nT length land between pits.

With experience, it has become evident that many factors must be considered in order to produce the optimal track of pits on the disc. For example, since the depth of a pit and its width vary along the track with the amount of time the beam is allowed to impinge on the surface, pit size and geometry is a function of surface speed -- an important factor for discs recorded in a constant angular velocity format. Other factors to be considered, already discussed, are duty cycle (>50%), the shape of the side walls of the pits in elevation (important for single-beam trackers), the asymmetry, and the pit resolution.

Pulse length can be increased to raise the duty cycle, but this increases asymmetry. Increasing the power level of the modulated light beam improves resolution at the leading edge and increases duty cycle but produces "pear-shaped" trailing edges and excessive asymmetry. Increasing peak power at the leading edge by using a stepped modulator driving pulse improves resolution of the leading edge but requires a reduction of pulse length to keep the duty cycle under control. Doing so gives unequal asymmetry for the different pulse lengths and requires an adjustment for each surface speed for best results. Threshold can be lowered to increase duty cycle, but this produces poorer resolution in the leading edges of the pits and ill-defined pit widths exhibiting substantial difference in geometrical shapes between a 3T and 11T pulse length. Finally, any attempts to increase pit resolution inherently diminishes the ability of single-beam trackers to track.

It can thus be appreciated that, while many adjustments of the parameters affecting the timing and geometry of the pits are available, the interaction by making any adjustment which affects other parameters is a tremendous problem which reduces yield and requires constant attention by a recording operator.

There is therefore a need in the art for a method and apparatus for driving the light modulator with a pulse which permits independent control of geometry and asymmetry over wider ranges than heretofore possible. The method and apparatus should permit adjustment of pulse length and power to optimize (minimize) asymmetry and permit adjustment of the geometry of the pits over the entire surface of the disc. This rather independent control of these parameters is extremely important when considering that for any given process for manufacturing discs, taking into account the differences in chemicals, surface thicknesses on the disc, molding machines, and mastering machines, any particular system would require a different adjustment to obtain optimal pit geometry and asymmetry, and the prior art has failed to provide this flexibility by being unable to control certain of the parameters independently. The present invention therefore satisfies a long need in the art for a method and apparatus which not only can permit optimal adjustment of the modulator driving pulse for a particular system but can also be adjustable to account for differences system-to-system.

### SUMMARY OF THE INVENTION

The present invention is directed to a dynamic waveform shaping circuit according to claim 1, 3 to preamble reflects what is described in US-A-5 297 729.

In one embodiment of the invention, the information signal is a ramped voltage to vary the depth of pits (or the height of bumps) in the recording surface as a function of radius.

In another embodiment of the invention, the information signal is a pulse wave shape modifying means which varies the depth of pits (or the height of bumps) in the recording surface as a function of pit type identified from a series of different pit types in an input pulse train (e.g. an EFM input pulse train).

In yet a further embodiment of the invention, the pit depth (or bump height) is varied in accordance with an input intelligence signal. Such input intelligence signal may be of any desired format and can be continuous, in which case the pit depth (or bump height) will vary continuously in correspondence with the input signal, or it can be incremental, in which case the pit depth (or bump height) will change incrementally. In a simple case, but not limited thereto, the depth of pits can be made shallow to indicate that a functional switch in the player of the medium should be in a first position, and deeper pits can indicate a second position. As an example, in the audio portion of the playback device, shallow pits could indicate that a monophonic signal is being presented, while deeper pits could indicate stereo, or such a switch could turn on and off a center sound channel. In a video presentation, shallow versus deeper pits could identify a change in picture aspect ratio of the recorded video program.

If the change of pit depth (or bump height) is continuous, the information derived by the player due to varying pit depth along the track could be sound effects, an extra channel of audio, special video masking or enhancing signals, and the like. In effect, the variable pit depth (or bump height) is treated as another information channel, like pit or bump length along the track. The embodiments fully described herein, by way of example only, however, are of the first two of the above-mentioned embodiments.

The invention provides a uniquely altered modulator drive signal for use in an optical recording apparatus by providing a waveform processing means which receives a rectangular wave from the EFM processor, otherwise provided as a modulator drive signal to modulate the light beam, and produces therefrom a modulator drive signal which dynamically varies in accordance with the position along the recorded information track, or in accordance with predetermined recorded information characteristics, or both. In a preferred embodiment of the invention, the modulator drive signal is dynamically altered as a function of radius on an optical disc, as a function of the width of pulses which form surface discontinuities of proportional lengths along the information track, or is dynamically altered as a function of pit length (3T-11T) of the EFM source signal, or both.

The remaining discussion assumes, but is not to be limited to, the use of a compact disc mastering machine which forms pits in the recordable surface of the disc and is capable of reading the recorded information immediately after it is recorded, i.e., the mastering machine is of a DRAW (Direct Read After Write) type. It is also presumed, but is not so limited, that the optical modulator used is an acousto-optical modulator, or AOM.

In one aspect of the invention, in order to compensate for inaccurate injection molding at the outer radius of a compact disc, the pit geometry is modified, in accordance with the invention, in a manner that offsets the lack of fidelity in molding. Towards the outer radii of a molded disc, the pits containing the data tend to be molded increasingly shallower than the rest of the disc. These shallower pits result in a lower signal during playback, and an associated rise in the error rate. By making the pits at the outer radii increasingly deeper during mastering, the detrimental effects of the molding can be cancelled out.

Contained within the machine controller of a compact disc mastering machine is a microcontroller and its associated firmware, which produces and controls the function of a duty cycle ramp. This microcontroller continuously monitors the current radius, and accordingly adjusts the recording duty cycle either continuously or, in a more intelligent control mode, in small steps. The values for the steps, and the radii at which they occur, are contained in a selectable pre-programmed look-up table. The actual output that effects the change in duty cycle is a slowly changing, or ramping, DC voltage from a digital-to-analog converter in a radius-to-voltage converter. This ramping voltage, in turn, is routed to a wave shaping circuit to alter the recording duty cycle.

The ramping DC voltage from the machine controller is summed with the AOM bias voltage (produced in a high speed duty cycle servo loop) in the wave shaping circuit. The resulting voltage sets the charging current on timing capacitors for the one-shots that determine the duty cycle of the output waveform. The output waveform from the wave shaping circuit is routed to the AOM which modulates the record laser beam, and it in turn records the pits in, for example, the recording surface of a dye-polymer media.

The duty cycle servo utilizes DRAW technology to adjust the recording laser power to maintain a set playback asymmetry. By making the record duty cycle smaller, the laser power must increase to maintain a constant playback asymmetry. Another effect of the higher laser power is an increase in the recorded pit depth. This increase in pit depth is the objective of the duty cycle ramp technology.

In another aspect of the invention, in order to compensate for inaccurate injection molding of the pits on a pit-by-pit basis, e.g. 3T pits being shallower than 11T pits, the pit geometry is modified in a manner that records shorter pits with greater depth than longer pits. In accordance with the invention, a wave shape modifying function alters the effects of the duty cycle servo to produce a modulator drive signal which forms surface discontinuities having a varying duty cycle along said track of surface discontinuities, the wave shape modifying means altering the physical character of individual surface discontinuities along said track of surface discontinuities dependent upon the pulse types (i.e., 3T to 11T) corresponding to the individual (3T to 11T length) surface discontinuities.

A dynamic waveform shaping circuit embodying the present invention, will now be described, by way of example, with reference to the accompanying diagrammatic drawings, in which:
Figure 1 is a generalized block diagram of a recording apparatus employing the waveform shaping circuit according to the present invention;
Figure 2 is a representation of a perfectly symmetrical eye-pattern according to CD standard specifications;
Figure 3 is a more detailed block diagram than that of Figure 1, and additionally shows a pulse discrimination and shaping function;
Figure 4 is a more detailed block diagram of the pulse discrimination and shaping function generally depicted in Figure 3; and
Figure 5 illustrates a model modulation driver waveform showing various portions of the waveforms which can be altered by the pulse discrimination and shaping function of Figures 3 and 4.

The diagram of the recording apparatus of Figure 1 includes only those prior art features of the apparatus which are pertinent to the novelty of the present invention. For the description of a complete optical recording apparatus, reference is made to the aforementioned US Patent No. 4,225,873.

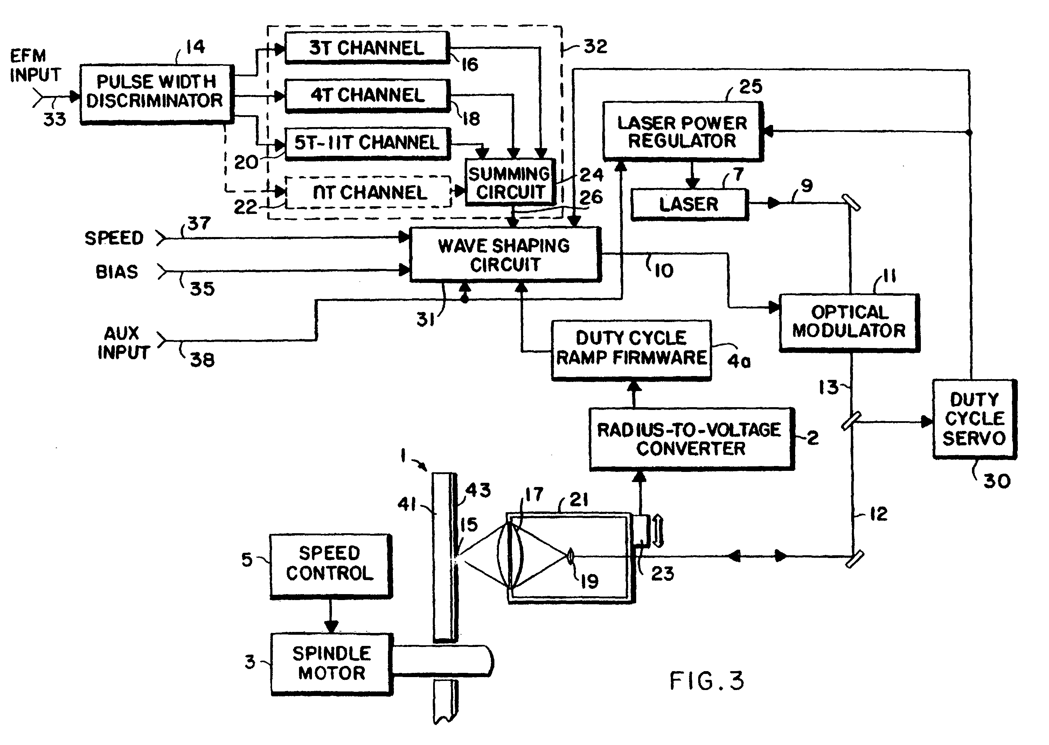

The recording apparatus shown in Figures 1 and 3 is designed for recording information on a rotating disc-shaped medium 1. The disc is rotated by a spindle motor 3 which is controlled by a speed controller 5 (Figure 3). Naturally, the medium could be in the form of a drum, a card, or a linear tape with the necessary modifications of the media moving systems being obvious to a skilled artisan.

A laser or similar high intensity light source 7 forms a writing beam 9 of a particular wavelength of light. The writing beam passes through an optical modulator 11 which varies the intensity of the writing beam in accordance with a drive signal on line 10. By way of example, the modulator 11 may be an acousto-optical modulator (AOM).

The beam 13 exiting the modulator will have an amplitude of modulation proportional to the amplitude of the drive signal and will have an average intensity controlled by the DC offset of the drive signal and the intensity of the unmodulated beam 9.

The modulated beam 13 is directed to the recording medium 1 and is focussed to a spot 15 by appropriate optics. These optics preferably include an objective lens 17 and a beam expanding lens 19 which spreads the beam from the modulator to fill the aperture of the objective lens 17. In the disclosed embodiment, the lenses 17 and 19 are mounted on a carriage 21 to allow radial movement of the spot 15 relative to the disc 1. Naturally, various other arrangements are possible for moving the spot 15 relative to the medium, including the movement of the spindle motor. In the disclosed embodiment, the carriage is moved by a translational drive system shown schematically at 23.

The drive signal for the optical modulator 11 is formed by a waveform shaping circuit 31. The waveform shaping circuit includes an EFM input 33 (Figure 1) or a processed EFM input 26 (Figure 3) defining for receiving the information to be recorded and may also include an input 35 for receiving a drive signal bias control for adjusting the average intensity of the modulated beam 13 (Figure 3 only). If the speed of the information medium relative to the focussed spot 15 is not constant, the signal processing system may include an input 37 for receiving a signal indicative of the instantaneous relative speed.

The recording medium 1 may include a substrate 41 and a light responsive recording layer 43 coated on the substrate.

A duty cycle servo 6 samples the "read" signal from disc 1 and sends correction signals to the wave shaping circuit 31 and laser power regulator 8 for, maintaining constant asymmetry.

Figure 2 is a representation of a perfectly symmetrical "eye-pattern" which would be readily understood by one skilled in the art and is presented here merely to show the necessity for controlled asymmetry in the recovered signal in the player. The diamond-shaped formations along the horizontal center line shows perfect zero crossover of all waveforms. Producing the idealized "eye-pattern" as shown provides for the greatest immunity to noise. If, for example, the 13 waveform (representing alternating 3T pits and 3T lands) were asymmetrical, i.e., the pit and land are not equal in length, a shift in one of the half cycles of the I3 waveform would not occur at the zero crossover point. If other waveforms also were asymmetrical to the point where it would be impossible along the horizontal center line of the graph of Figure 2 to distinguish one nT signal from another nT signal, an improper signal would be recovered from the played disc and the phase lock loop may not be able to lock to the signal, thereby losing the self-generated clock and destroying the integrity of the played back signal, or such asymmetry could ever result in detecting the edges of the pits falling in the wrong timing window created by the clock, again with disastrous results. The standard electrical output of the EFM processor for CD mastering for inputting on line 33, is a rectangular wave with a duty cycle average of about 50%, in spite of pulse-to-pulse variations in duration from 3T to 11T.

Generally, the present invention relates to analyzing the data stream from a direct read-after-write (DRAW) playback read head and adjusting the recording functions to make the playback signal as perfect as possible. In this way, as close to perfect playback of the discs by consumers can be realized, and yet the mold used in injection molding of replica discs can be imperfect. The signal driving the optical modulator 11 can likewise be imperfect, such imperfections being purposely put in place in order that the final product, the molded replica, or playback disc, will be perfect. This purposeful adjusting the mastering processing away from theoretical ideals can only be done, from a practical viewpoint, with mastering systems that can employ a real-time direct read-after-write (DRAW) function. Mastering processes that employ photoresist cannot realize the same success due to the need to completely manufacture a replica disc, test the replica, make further adjustments, and then replicate again. The time and cost of such a procedure to arrive at optimum parameters for producing a perfect replica is prohibitive.

Further, the present invention can only be used with a mastering system and recording medium combination which can produce continuous gradations in the physical properties of the recording surface, eg a combination which can produce different depths of pits (or heights of bumps) on the media surface. While recording media employing photoresist might, in theory, be capable of generating pits of selective depth through application of selective light exposure, this method is incapable of employing a DRAW fimction.

As indicated, a primary objective of the invention is to produce a correction signal, or compensation signal, intended to compensate for molding phenomena, where at the outer edge of the disc, typically what is observed is the molding process does not mold all pits with equal pit depth. The pits get shallow at the outer edge. There is not enough pressure and temperature to make a good copy of the pits at the outer edge of the CD or Videodisc mold.

The present invention solves this problem by forcing individual theoretically fixed pulse lengths to be nonconstant. As is known in the art, it is a goal of the molding processing to dynamically adjust the laser recording power to hold the pulse length constant (for a particular pulse type, eg 3T-11T) over the entire surface of the disc. In the present invention, however, the pulse length is purposely altered by a ramp function inserted to be effective for all radii or to be inserted at a certain radius. The ramp function is generated in a machine controller 20 shown to comprise a duty cycle ramp generator 4 which produces a ramped signal at its output coupled to wave shaping circuit 31. The ramped output level is determined by the radius of the write head of the mastering machine, and varies continuously as the radius of the write head changes. The ramp function may be linear, nonlinear, or follow any curve suitable for the particular disc type, size, and determined need for compensation, to make the surface discontinuities deeper or shallower at the outer edge. In a typical DRAW mastering machine, the ramp function makes the pits deeper with increasing radius.

Because a high speed duty cycle loop through duty use servo 6 is still working, still holding the asymmetry constant, when the radius dependent variable voltage level ramp function is inserted, the pulse length out of wave shaping circuit 31 gets shorter toward the outer radius of the disc, but the laser power rises under control of laser power regulator 8, and the asymmetry is still held constant. Thus, while the asymmetry is held constant, but the peak power is now greater, because the pulse length is shorter, the pits are made deeper as the recording process continues. Yet, the playback symmetry remains constant all across the surface of the disc. This combination of function may thus be referred to as a double nested servo loop, the ramp function effectively defining a low speed servo loop. It allows changing the pit depth and yet still maintaining constant asymmetry as a result of the two high and low speed servo loops. That is, when a compensating signal from duty cycle ramp generator is inserted into the servo loop, essentially causing the pulse length to get shorter, the laser power will increase to make up for the pulse length getting shorter, thereby producing constant asymmetry.

The constant asymmetry is due to the high speed pulse width servo loop comprising duty cycle servo 6, wave shaping circuit 31, optical modulator 11, and the read head (not shown) providing directly read information from the disc to servo 6. Thus, the high speed pulse width servo continues to do the same thing that it always has done, prior to implementing the present invention, that is, hold the asymmetry constant. But, the laser power, which has been holding the pulse length constant is, in accordance with the present invention, intentionally not being held constant, i.e., the laser power must increase for shorter pulse lengths in order to preserve asymmetry.

Employing this method, i.e., changing the depth of the pits as a function of radius without changing the asymmetry or virtually any of the other signals retrieved from an optical disc, is uniquely possible with DRAW mastering machines. Importantly, this method cannot be performed using a photoresist mastering procedure. The reason the aforedescribed method works with the type of optical disc recording technique with which the present invention is used, is that the recording medium used with the invention is not cut all the way through the recording layer. On the contrary, the depth of the pits follows the peak laser power.

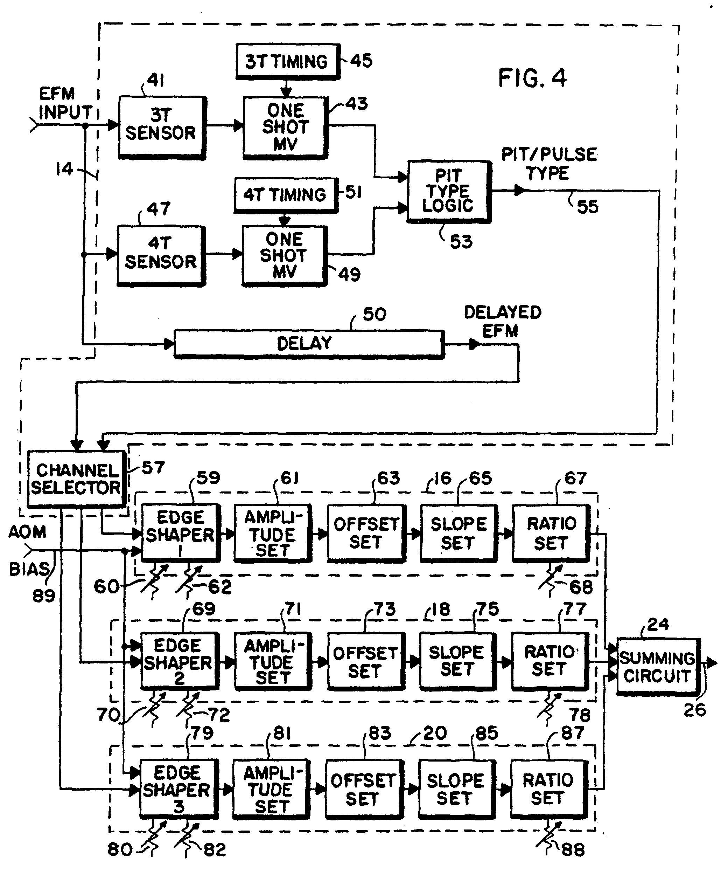

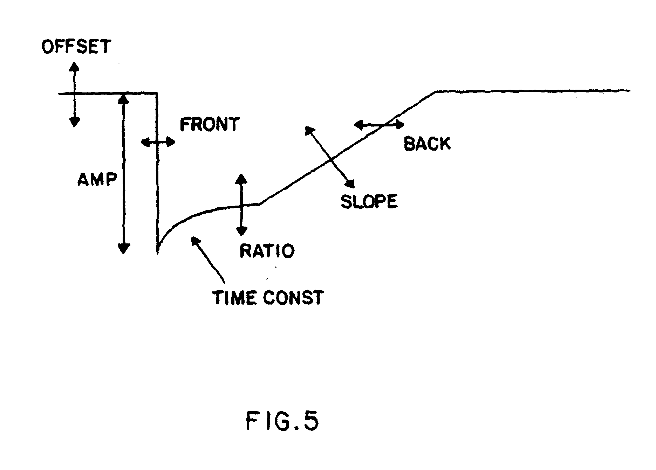

In a second primary objective of the invention, shown in Figures 3 and 4, the modulation drive signal is dynamically altered on the basis of the length of EFM input pulses used to form corresponding surface discontinuities on the disc. Basically, this is accomplished in a dual function circuit comprising a pulse width discrimination 14 and a pulse shaping processor 32, the latter supplementing the shaping of the optical modulator output pulses by wave shaping circuit 31. The pulse width discriminator 14 senses the input EFM signal on line 33 for 3T, 4T, and 5T-11T pulses, then sends the EFM signal, delayed through delay circuit 50, along with the pit/pulse type to a channel selector 57. The delay on the EFM signal is to ensure that the pit/pulse type information is available to the channel selector and pulse shaping processor 32 before the actual pit starts being formed. The pulse shaping processor 32 consists of three identical processing channels 16, 18, 20. Each channel 16, 18, 20 generates a specific waveform for forming 3T pit, 4T pit, and 5T-11T pits, i.e., it generates waveforms with different front and back edge delays, amplitude, offset, back slope, tip ratio, and time constant. Functional blocks 59, 61...85, 87 represent circuitry to perform these waveform alterations, and with knowledge of precisely what part of the modulator drive signal on line 10 is to be adjusted by reference to the waveform in Figure 5, a person of ordinary skill in the art will have no difficulty in selecting and arranging the appropriate electronic components to perform the desired functions. Of course, separate circuit stages are not necessary, and good design with efficient layout can minimize component complexity. For example, amplitude setting and offset setting can be performed in the same amplifier stage.

The discriminator consists of three blocks, a 3T pulse sensor 41, a 4T pulse sensor 47, and an EFM delay circuit 50. The 3T and 4T pulse sensors 41 and 47 use one-shots to qualify the signal. The default signal is qualified as sensing a pulse in the range 5T- 11T. The EFM delay is needed to account for decision time, so the pit/pulse type will be known beforehand.

The edge shaper blocks 59, 69, 79 provide for different delays, set by front and back pots 60 and 62, 70 and 72, and 80 and 82, respectively on the front and back edges to modify the laser on time by a fixed amount of time. One of the three edge shapers 59, 69, 79 is selected by the pit/pulse type control signal on line 55 from the pulse width discriminator 14.

The remaining blocks 61-67, 71-77, and 81-87 generate desired waveform through three independent channels for 3T, 4T, and 5T-11T pulses respectively; so different type of pits can be formed using a different waveform suitable for recording optimization. Each channel has its own offset adjustment 63, 73, 83 to set the signal top level, amplitude adjustment 61, 71, 81 to define the signal amplitude, ratio adjustment 67, 77, 87 to set the flat bottom part of the signal, time constant adjustment 68, 78, 88 to change the RC time constant of the tip, and back slope adjustment 65, 75, 85 for setting the rising slope of the back edge.

The summing circuit 24 comprises an output stage which combines waveforms from the three wave shaping channels 16, 18, 20 and drives the output coax cable 26.

Importantly, the invention may employ both pit compensation functions, i.e., the radius dependent function and the EFM pulse width function. That is, in addition to having the ability to make the pits deeper as a function of radius by making the pulses shorter and recording them with higher laser power, as described earlier herein, the invention may simultaneously employ an equalization method that allows the changing of the depth of individual pits. That is, the 3T pits can be made deeper or shallower than the 4T pits which, in turn, can be made deeper or shallower than the 5T pits which, in turn, can be made deeper or shallower than the 5T through 11T pits. Moreover, if deemed necessary and appropriate, other individual pit lengths, e.g any or all pit lengths 5T through 11T can be customized as to depth. In the use of the preferred mastering system described herein, only three identically constructed channels (16, 18, 20) of pit depth alteration are needed, one channel each for the 3T, 4T, and 5T-11T pits. Shown in phantom in Figure 3 is channel 22 representing additional channels if desired.

A pulse width discriminator 14 is used to determine the pulse width of each pulse in the EFM input pulse train. If the pulse is a 3T pulse, it is shortened in channel 16 separately from the other detected pulses. This altering of the pulse length individually for the different 3T-11T pulses is in addition to the aforedescribed ramping function which shortens all pulses regardless of length as a function of radius. It is an ultimate goal of the invention to, if needed, to tailor the 3T through 11T pulses independently. That is, by pulse duration, the invention decides how much to alter the length of each pulse individually. One skilled in the art can easily extrapolate by reference to Figure 3 how to implement the needed nT channels.

Individual pit depths are altered and controlled by pulse shaping processor 32, i.e., by electronic processing channels 16, 18, 20 which, after recognition of the pulse length, 3T - 11T, shortens or lengthens the pulse and, selectively, configures the pulse with an optimum waveform. The duty cycle servo 6 simultaneously adjusts laser peak power through laser power regulator 8. For example, when a 3T pulse is detected by discriminator 14, the appropriate electronic circuit 16, 18, 20, 22 may shorten or lengthen the pulse in width and increase or decrease, respectively, laser peak power for the duration of the pulse.

Using the example of the last paragraph, it is important to note that, if all that is needed is to make 3T pits shallower, only the laser power regulator 8 is needed to reduce the laser power for the duration of the pulse used to form the pit. However, if that were done, it would upset the asymmetry which, as discussed above, is essential to be kept in proper registration. This potential problem is overcome by making the 3T pulse shorter at the same time the laser power is increased during the pulse, or visa versa. The processing channel 16 thus adjusts both the amplitude, duration, and wave shape of all of the 3T pulses differently from all the 4T pulses (in processing channel 18) differently from all the 5T through 11T pulses (in processing channel 20).

The discriminator 14 predetermines how long the incoming EFM pulse is, then selects which channel is to process that pulse (3T, 4T, or 5T-11T channel). Each channel has adjustment potentiometers for setting the desired amplitude, duration, and wave shape of the emerging pulse to be summed with the other processed pulses in summing circuit 24, and sent over line 26 to the optical modulator 11. Optionally, the processed pulse out of summing circuit 24 may be sent to a further wave shaping circuit 31 which performs the functions described supra in connection with Figure 1.

As compared to the prior art, some prior art schemes propose to cause the write pulse to have a sharp and high power leading edge, sloping off more gradually toward the trailing edge. While this process indeed affects the shorter 3T pulses more than the longer 11T ones, due to the greater percentage of pulse time the leading edge contributes for the shorter pulses, this is solely an amplitude adjusting process. The present invention differs in that it sets write output pulse width to the optical modulator as a function of write input pulse width of the EFM signal.

The manner of combining the two processes of compensating for pit depth variation as a function of radius and compensating for pit depth variation as a function of incoming pulse length, involves setting the individual pulse wave shape compensator 14, 16, 18, 20, 22 first at the inner radius of the master disc. Then, as radius increases, the radius dependent pulse alteration function is enabled. It should be noted that the radius dependent compensation can be enabled from the beginning of the track on the disc to the end, or can be enabled at a prescribed radius. Also, the compensation can be continuous or can change incrementally at a prescribed radius. Moreover, each pulse wave shape compensation circuit channel 16, 18, 20, 22 has the ability of not only adjusting for outgoing pulse width but also of modifying the leading and trailing edges of the pulse passing through the particular channel. Of course, this complex scheme of adjusting the write pulses in so many ways is possible only on DRAW machines where instant results can be verified and parameters set for each processing channel. For example, in such a case, the eye pattern is real-time observable to insure a minimization of the phase errors of the zero crossings. In any event, by using the feedback from the disc as it is being recorded, the write pulses can be observed to be the right length, duration, and wave shape, or not, and appropriate correction functions can be initiated on a pulse-by-pulse basis or on an averaging basis for each pulse/pit T-length. This insures that what will be played back on the disc will be as perfect as possible.

Regarding the radius ramp embodiment, the circuitry may have a programmable compensation in it so that, rather than having the master formed perfectly, the master may be formed purposely not perfect (has a built-in precompensation-for-molding function) so that the replicas can be perfect. This additional function must, however, be open loop, i.e., such a pre-molding offset function would have to be preset rather than having a servo loop perform the function to make the master perfect.

All aspects of the invention relate to looking at the data stream input to the mastering machine, and using the playback information of the disc to make the data stream have the character it should for best playback of replicas, whether a master disc produced by such a process is perfect or is precompensated for molding. In all cases, the invention can be used only with a DRAW mastering machine using a recording media that can be recorded with pits of different depths or bumps of different heights.

Previously described was an embodiment of the invention, whereby a channel of information, referred to herein and in Figures 1 and 2 as an auxiliary input 38, can be recorded as variations in the depth of pits or height of bumps on the recordable medium surface. For the ramp and pit-type functions described in detail supra, no external "auxiliary input" is required. However, in the embodiments where an additional channel of recorded information is desired, an auxiliary input 38 may be coupled as input to either the wave shaping circuit 31 or the laser power regulator 8, or both, for making the necessary pulse modifications to create variable pit depth (or bump height). If inputted to the wave shaping circuit 31, the amplitude of the pulse on line 10 driving optical modulator 11 would be varied. On the other hand, if pit depth or bump height is to be more directly affected by the auxiliary channel of information, the auxiliary input 38 is sent to laser power regulator 8 which instantaneously controls the power of the laser 7 in accordance with the information contained in the auxiliary input.

In either case, inputting auxiliary information to wave shaping circuit 31 or laser power regulator 8, there will be a purposely varying duty cycle of the recorded pits or bumps along the track which the player would sense and make appropriate correction for by generating a player duty cycle servo signal. This correction signal is, in effect, the recorded auxiliary input information which can then be extracted for any desired use by the player.

Instead of a separate "auxiliary input" signal used to modify the modulator drive signal to effect variable depth pits (or bump heights), the input signal to the wave shaping circuit 31 (exemplified by EFM input 33 in Figures 1 and 2), the pit depth (or bump height) can be varied by encoding the "auxiliary information" as amplitude variations of the input signal 33.

Although the invention has been described in detail with reference to its presently preferred embodiment, it will be understood by one of ordinary skill in the art that various modifications can be made without departing from the scope of the invention. Accordingly, it is not intended that the invention be limited, except as by the appended claims.

## Claims

1. A dynamic waveform shaping circuit for use in optical recording apparatus which includes a writing beam source (7) for recording information representing three dimensional surface discontinuities along a surface track of an optical recording medium (1), said circuit comprising means to generate a drive signal to modulate the intensity of the writing beam from said source (7) above and below a threshold level of the recording medium (1), said beam being capable of forming such a surface discontinuity in said track in the recording medium when the writing beam is above the write threshold of the medium and incapable of forming such a surface discontinuity in said track when the writing beam is below the threshold, said waveform shaping circuit comprising:
wave shaping means (31, 8, 22) for receiving a pulsed input signal and for producing said drive signal therefrom; **characterised by**
a duty cycle servo (6) coupled to said wave shaping means (31, 8, 22) and responsive to the modulated writing beam to selectively maintain a prescribed duty cycle of such three-dimensional surface discontinuities along said track; and
wave shape modifying means (20; 32), coupled to said wave shaping means (31) and to said duty cycle servo (6; 30) for selectively altering the effects of said duty cycle servo (6; 30) to cause said beam to form such surface discontinuities with a selectively altered geometric dimension, while maintaining a prescribed duty cycle along said track of surface discontinuities.

2. A circuit as claimed in Claim 1, **characterised in that** said wave shape modifying means (20) comprises a ramp voltage generator (4) which applies a selectively varying voltage input to said wave shaping means (31) for altering said geometric dimension at selective positions along said track.

3. A circuit according to Claim 2, **characterised in that** said wave shape modifying means (20) comprises means for altering said geometric dimension of individual surface discontinuities along said track dependent upon the pulse types corresponding to said individual surface discontinuities.

4. A circuit as claimed in Claim 2 or Claim 3, **characterised in that** said recording medium is a disc (1), said selective positions correlate with corresponding selection radii of the disc (1) and said geometric dimension is measured perpendicularly from the surface of said disc (1).

5. A circuit as claimed in Claim 4, **characterised in that**:
said surface discontinuities are pits formed in said surface of said disc (1); and
said wave shape modifying means (20) produces a ramp voltage which selectively alters the depth of said pits along said track.

6. A circuit as claimed in any preceding claim, **characterised in that** said wave shaping means comprises a power regulator (8; 25) for varying the intensity of said writing beam (5), and wherein:
said duty cycle servo (6; 30) is coupled to said power regulator (8; 25) for altering the intensity of said beam in a manner to vary the duty cycle along said track oppositely from the variance of the duty cycle caused by said wave shape modifying means, thereby forming a closed loop servo function which allows the variation of duty cycle caused by said wave shape modifying means (8, 25) to be offset by the variation of the duty cycle caused by altering the intensity of the write beam (15) thus maintaining said prescribed duty cycle.

7. A circuit as claimed in any preceding claim, **characterised in that** said wave shape modifying means (20) produces a multi-stepped voltage ramp.

8. A circuit according to Claim 1, **characterised in that** said wave shape modifying means (14, 32) comprises means for selectively altering the said geometric dimension of individual surface discontinuities along said track dependent upon the pulse types corresponding to said individual surface discontinuities.

9. A circuit as recited in Claim 8, **characterised in that** said input signal comprises a series of rectangular pulse widths of nT duration, T being a fixed period of time, and n being an integer of varying value.

10. A circuit as claimed in Claim 9, **characterised in that** said pulse widths range from 3T to 11T, T being a fixed period of time defined in the rules for the EFM code standard in the recording and reproduction of information discs commonly known as compact discs, and **in that** said altering means (14, 32) includes:
means (16) for selectively detecting and altering only 3T pulse widths;
means (18) for selectively detecting and altering only 4T pulse widths; and
means (20) for selectively detecting and altering all 5T through 11T pulse widths.

11. A circuit as claimed in Claim 1, **characterised in that** said wave shape modifying means (4; 4a) operates in response to a modification input signal, said wave shape modifying means (4, 4a) causing information represented by said modification input signal to result in corresponding dimensional variation of said surface discontinuities.

12. A circuit as claimed in Claim 11, **characterised in that**:
said surface discontinuities are pits; and
information represented by said modification input signal is recorded on said medium as variable pit depths.

13. A circuit as claimed in any preceding claim, **characterised in that** said writing beam source is a laser (7).

14. A circuit as claimed in any of Claims 11 to 13, **characterised in that** said recording medium is a disc (1), and further comprising radial position detection means (2) providing an input to said wave shape modification means (4; 4a) representative of the instantaneous radial position of said writing beam in respect of said disc (1), said wave shape modifying means operating in accordance with said input from said radial position detection means (2).

15. A circuit as claimed in any one of Claims 1 to 3, **characterised in that** said pulsed input signal to said wave shaping means (31) comprises a first data stream and a second data stream, said writing beam (15) selectively recording said first data stream and said second data stream as correspondingly varying dimensions of said surface discontinuities in a direction perpendicular to said recording medium surface (1).

16. A circuit as claimed in Claim 15, **characterised in that** said recording medium is a disc (1), and said selective positions correlate with corresponding selective radii of the disc (1).

17. A circuit as claimed in Claim 15 or in Claim 16, **characterised in that** said surface discontinuities are pits formed as a track of pits on said recording surface of the recording medium (1), and said second data stream causes alteration of pit depths generated responsively to said first data stream.

18. A circuit as claimed in Claim 15 or in Claim 16, **characterised in that** the operation of said wave shape modifying means is controlled, at least in part, by said second data stream.

## Patentansprüche

1. Schaltung für dynamisches Wellenformen für die Verwendung in optischen Aufzeichnungseinrichtungen, die eine Schreibstrahlquelle (7) enthalten zur Aufzeichnung von Informationen repräsentierenden dreidimensionalen Oberflächenstufen entlang einer Oberflächenspur eines optischen Aufzeichnungsmediums (1), wobei besagte Schaltung ein Mittel umfasst zur Erzeugung eines Treibersignals zur Modulation der Intensität des Schreibstrahls von besagter Quelle (7) oberhalb und unterhalb eines Schwellwerts des Aufzeichnungsmediums (1), wobei besagter Strahl in der Lage ist, solche Oberflächenstufen in der besagten Spur im Aufzeichnungsmedium zu erzeugen, wenn der Schreibstrahl oberhalb der Schreibschwelle des Mediums ist und nicht in der Lage ist, solche Oberflächenstufen in der besagten Spur im Aufzeichnungsmedium zu erzeugen, wenn der Schreibstrahl unterhalb der Schreibschwelle des Mediums ist, wobei die besagte Wellenformungs- Schaltung folgendes umfasst:
Wellenformungsmittel (31, 8, 22) zum Empfangen eines gepulsten Eingangssignals und um daraus das besagte Treibersignal zu erzeugen; **gekennzeichnet durch** einen Tastverhältnis- Servo (6), angeschlossen an die besagten Wellenformungsmittel (31, 8, 22) und reagierend auf den modulierten Schreibstrahl, um gezielt ein vorbestimmtes Tastverhältnis dieser dreidimensionalen Oberflächenstufen entlang der besagten Spur aufrechtzuerhalten; und
ein Wellenformänderungsmittel (20, 32), angeschlossen an besagtes Wellenformungsmittel (31) und besagten Tastverhältnis- Servo (6, 30), um gezielt die Wirkungen des besagten Tastverhältnis- Servo (6, 30) so zu ändern, dass der besagte Strahl diese besagten Oberflächenstufen mit gezielt geänderten geometrischen Abmessungen erzeugt, wobei ein vorbestimmtes Tastverhältnis entlang der besagten Spur von Oberflächenstufen aufrechterhalten bleibt.

2. Schaltung nach Anspruch 1, **dadurch gekennzeichnet, dass** das besagte Wellenformänderungsmittel (20) einen Rampenspannungsgenerator (4) umfasst, der eine gezielt variable Eingangsspannung für das besagte Wellenformungsmittel (31) erzeugt, um die besagten geometrischen Abmessungen an bestimmten Positionen entlang besagter Spur gezielt zu ändern.

3. Schaltung nach Anspruch 2, **dadurch gekennzeichnet, dass** das besagte Wellenformänderungsmittel (20) ein Mittel zur Änderung der geometrischen Abmessungen einzelner Oberflächenstufen entlang besagter Spur in Abhängigkeit vom Pulstyp der entsprechenden individuellen Oberflächenstufen umfasst.

4. Schaltung nach Anspruch 2 oder 3, **dadurch gekennzeichnet. dass** das besagte Aufzeichnungsmedium eine Scheibe (1) ist, die besagten bestimmten Positionen mit entsprechenden Selektionsradien der besagten Scheibe (1) korrelieren und besagte geometrische Abmessungen senkrecht zur Oberfläche besagter Scheibe (1) gemessen werden.

5. Schaltung nach Anspruch 4, **dadurch gekennzeichnet, dass**:
besagte Oberflächenstufen Pits sind, die in der besagten Oberfläche der besagten Scheibe (1) gebildet werden; und dass das besagte Wellenformänderungsmittel (20) eine Rampenspannung erzeugt, die gezielt die Tiefe der besagten Pits entlang besagter Spur ändert.

6. Schaltung nach einem der vorhergehenden Ansprüche, **dadurch gekennzeichnet, dass** das besagte Wellenformungsmittel einen Leistungsregler (8, 25) zur Änderung der Intensität des Schreibstrahls (5) umfasst, und wobei:
der besagte Tastverhältnis- Servo (6, 30) an den besagten Leistungsregler (8, 25) angeschlossen ist, um die Intensität des Schreibstrahls (5) so zu ändern, dass das Tastverhältnis entlang besagter Spur entgegengesetzt der Änderung des Tastverhältnisses, das durch das besagte Wellenformänderungsmittel hervorgerufen wird, geändert wird, wodurch eine geschlossene Servo- Schleifenfunktion gebildet wird, die erlaubt, die Änderung des Tastverhältnisses. das durch das besagte Wellenformänderungsmittel hervorgerufen wird, durch Änderung der Intensität des Schreibstrahls (15) zu kompensieren und somit das besagte vorbestimmte Tastverhältnis aufrechtzuerhalten.

7. Schaltung nach einem der vorhergehenden Ansprüche, **dadurch gekennzeichnet, dass**
das besagte Wellenformänderungsmittel (20) eine mehrstufige Rampenspannung erzeugt.

8. Schaltung nach Anspruch 1, **dadurch gekennzeichnet, dass**
das besagte Wellenformänderungsmittel (14, 32) Mittel zum gezielten Ändern der besagten geometrischen Abmessungen einzelner Oberflächenstufen entlang besagter Spur in Abhängigkeit vom Pulstyp der entsprechenden individuellen Oberflächenstufen umfasst.

9. Schaltung nach Anspruch 8, **dadurch gekennzeichnet, dass**
das besagte Eingangssignal aus einer Folge von Rechteckpulsen der Breite nT besteht. wobei T eine festgelegte Zeitspanne bedeutet und n eine ganze Zahl mit variablem Wert ist.

10. Schaltung nach Anspruch 9, **dadurch gekennzeichnet, dass**
die besagte Pulsbreite im Bereich von 3T bis 11T variiert, wobei T eine festgelegte Zeitspanne ist, die in den Regeln für den EFM Code Standard für Aufnahme und Wiedergabe von Informationen auf Scheiben, allgemein als Compact Disc bekannt, definiert ist und dadurch, dass
das besagte Änderungsmittel (14, 32) umfasst:
Mittel (16) zum gezielten Erfassen und Ändern nur von Pulsbreiten 3T;
Mittel (18) zum gezielten Erfassen und Ändern nur von Pulsbreiten 4T;
Mittel (20) zum gezielten Erfassen und Ändern aller Pulsbreiten 5T bis 11T.

11. Schaltung nach Anspruch 1, **dadurch gekennzeichnet, dass**
das besagte Wellenformänderungsmittel (4, 4a) als Reaktion auf ein Änderungs-Eingangssignal so arbeitet, dass die Information, die in dem besagten Änderungs-Eingangssignal enthalten ist, das besagte Wellenformänderungsmittel (4, 4a) so steuert, dass sich eine entsprechende Änderung der geometrischen Abmessungen der besagten Oberflächenstufen ergibt.

12. Schaltung nach Anspruch 11, **dadurch gekennzeichnet, dass** besagte Oberflächenstufen Pits sind, und dass die Information, die durch besagtes Änderungs- Eingangssignal repräsentiert wird, auf besagtem Medium als variable Pit-Tiefe aufgezeichnet wird.

13. Schaltung nach einem der vorstehenden Ansprüche, **dadurch gekennzeichnet, dass** besagte Schreibstrahlquelle (7) ein Laser ist.

14. Schaltung nach einem der Ansprüche 11 bis 13, **dadurch gekennzeichnet, dass** besagtes Aufzeichnungsmedium (1) eine Scheibe ist und weiterhin ein Detektionsmittel (2) für radiale Position umfasst, das ein Eingangssignal für das besagte Wellenformänderungsmittel (4, 4a) zur Verfügung stellt, das repräsentativ für die augenblickliche radiale Position des besagten Schreibstrahls in Bezug auf besagte Scheibe (1) ist und das besagte Wellenformänderungsmittel entsprechend dem besagten Eingangssignal von dem besagten Detektionsmittel (2) für radiale Position arbeitet.

15. Schaltung nach einem der Ansprüche 1 bis 3, **dadurch gekennzeichnet, dass**
das besagte gepulste Eingangssignal für das besagte Wellenformänderungsmittel (31) einen ersten Datenstrom und einen zweiten Datenstrom umfasst und dass der besagte Schreibstrahl (15) gezielt den ersten Datenstrom und den zweiten Datenstrom aufzeichnet als entsprechend variierende Dimensionen der besagten Oberflächenstufen in einer Richtung senkrecht zur Oberfläche (1) des besagten Mediums.

16. Schaltung nach Anspruch 15, **dadurch gekennzeichnet, dass**
das besagte Aufzeichnungsmedium eine Scheibe (1) ist und besagte selektive Positionen mit entsprechenden radialen Positionen der Scheibe (1) korrelieren.

17. Schaltung nach Anspruch 15 oder 16, **dadurch gekennzeichnet, dass**
besagte Oberflächenstufen Pits sind, geformt als Pitspur auf besagter Aufzeichnungsoberfläche des besagten Aufzeichnungsmediums (1) und dass der zweite Datenstrom eine Veränderung der Pittiefe verursacht als Reaktion auf den besagten ersten Datenstrom.

18. Schaltung nach Anspruch 15 oder 16, **dadurch gekennzeichnet, dass**
die Arbeitsweise des besagten Wellenformänderungsmittels wenigstens teilweise von dem besagten zweiten Datenstrom gesteuert wird.

## Revendications

1. Circuit de mise en forme dynamique de forme d'onde pour utilisation dans un appareil d'enregistrement optique qui comprend une source de faisceau d'écriture (7) pour enregistrer des informations représentant des discontinuités en surface tridimensionnelles le long d'une piste en surface d'un support d'enregistrement optique (1), ledit circuit comprenant un moyen pour générer un signal d'attaque pour moduler l'intensité du faisceau d'écriture provenant de ladite source (7) en dessus et en dessous d'un niveau de seuil du support d'enregistrement (1), ledit faisceau étant capable de former une telle discontinuité en surface dans ladite piste dans le support d'enregistrement lorsque le faisceau d'écriture est en dessus du seuil d'écriture du support et incapable de former une telle discontinuité en surface dans ladite piste lorsque le faisceau d'écriture est en dessous du seuil, ledit circuit de mise en forme de forme d'onde comprenant :
Le moyen de mise en forme d'onde (31, 8, 22) pour recevoir un signal d'entrée impulsionnel et pour produire ledit signal d'attaque à partir de celui-ci, **caractérisé par**
- un asservissement de rapport cyclique (6) couplé audit moyen de mise en forme d'onde (31, 8, 22) et sensible au faisceau d'écriture modulé pour maintenir sélectivement un rapport cyclique prescrit de telles discontinuités en surface tridimensionnelles le long de ladite piste ; et
- un moyen de modification de forme d'onde (20 ; 32), couplé audit moyen de mise en forme d'onde (31) et audit asservissement de rapport cyclique (6 ; 30) pour modifier sélectivement les effets dudit asservissement de rapport cyclique (6 ; 30) pour amener ledit faisceau à former de telles discontinuités en surface avec une dimension géométrique sélectivement modifiée, tout en maintenant un rapport cyclique prescrit le long de ladite piste de discontinuités en surface.

2. Circuit selon la revendication 1, **caractérisé en ce que** le moyen de modification de forme d'onde (20) comprend un générateur de tension en rampe (4) qui applique une entrée de tension sélectivement variable audit moyen de mise en forme d'onde (31) pour modifier ladite dimension géométrique à des positions sélectives le long de ladite piste.

3. Circuit selon la revendication 2, **caractérisé en ce que** ledit moyen de modification de forme d'onde (20) comprend un moyen pour modifier ladite dimension géométrique des discontinuités individuelles en surface le long de ladite piste en fonction des types d'impulsion correspondant auxdites discontinuités individuelles en surface.

4. Circuit selon la revendication 2 ou 3, **caractérisé en ce que** ledit support d'enregistrement est un disque (1), lesdites positions sélectives sont en corrélation avec des rayons de sélection correspondants du disque (1) et ladite dimension géométrique est mesurée perpendiculairement depuis la surface dudit disque (1).

5. Circuit selon la revendication 4, **caractérisé en ce que** :
- lesdites discontinuités en surface sont des micro-cuvettes formées dans ladite surface dudit disque (1) ; et
- ledit moyen de modification de forme d'onde (20) produit une tension en rampe qui modifie sélectivement la profondeur desdites micro-cuveltes le long de ladite piste.

6. Circuit selon l'une quelconque des revendications précédentes, **caractérisé en ce que** ledit moyen de mise en forme d'onde comprend un régulateur de puissance (8; 25) pour faire varier l'intensité dudit faisceau d'écriture (5), et dans lequel :
ledit asservissement de rapport cyclique (6 ; 30) est couplé audit régulateur de puissance (8 ; 25) pour modifier l'intensité dudit faisceau de manière à faire varier le rapport cyclique le long de ladite piste de manière opposée à la variance du rapport cyclique provoquée par ledit moyen de modification de forme d'onde, formant ainsi une fonction d'asservissement en boucle fermée qui permet à la variation du rapport cyclique provoquée par ledit moyen de modification de forme d'onde (8 ; 25) d'être compensée par la variation du rapport cyclique provoquée en modifiant l'intensité du faisceau d'écriture (15), maintenant ainsi ledit rapport cyclique prescrit.

7. Circuit selon l'une quelconque des revendications précédentes, **caractérisé en ce que** ledit moyen de modification de forme d'onde (20) produit une rampe de tension à niveaux multiples.

8. Circuit selon la revendication 1, **caractérisé en ce que** ledit moyen de modification de forme d'onde (14, 32) comprend un moyen pour modifier sélectivement ladite dimension géométrique des discontinuités individuelles en surface le long de ladite piste en fonction des types d'impulsion correspondant auxdites discontinuités individuelles en surface.

9. Circuit selon la revendication 8, **caractérisé en ce que** ledit signal d'entrée comprend une série de largeurs d'impulsion rectangulaires d'une durée nT, T étant une période fixée de temps, et n étant un nombre entier d'une valeur variable.

10. Circuit selon la revendication 9, **caractérisé en ce que** lesdites largeurs d'impulsion vont de 3T à 11T, T étant une période fixée de temps définie dans les règles pour la norme de code EFM dans l'enregistrement et la reproduction des disques d'information connus habituellement comme disques compacts, et **en ce que** ledit moyen de modification (14, 32) comprend :
- un moyen (16) pour ne détecter et modifier sélectivement que les largeurs d'impulsion 3T ;
- un moyen (18) pour ne détecter et modifier sélectivement que les largeurs d'impulsion 4T ; et
- un moyen (20) pour détecter et modifier sélectivement toutes les largeurs d'impulsion de 5T à 11T;

11. Circuit selon la revendication 1, **caractérisé en ce que** ledit moyen de modification de forme d'onde (4 ; 4a) opère en réponse à un signal d'entrée de modification, ledit moyen de modification de forme d'onde (4, 4a) amenant des informations représentées par ledit signal d'entrée de modification à aboutir à une variation dimensionnelle correspondante desdites discontinuités en surface.

12. Circuit selon la revendication 11, **caractérisé en ce que**:
lesdites discontinuités en surface sont des micro-cuvettes ; et
les informations représentées par ledit signal d'entrée de modification sont enregistrées sur ledit support comme profondeurs de micro-cuvette variables.

13. Circuit selon l'une quelconque des revendications précédentes, **caractérisé en ce que** ladite source de faisceau d'écriture est un laser (7).

14. Circuit selon l'une quelconque des revendications 11 à 13, **caractérisé en ce que** ledit support d'enregistrement est un disque (1), et comprend, en outre, un moyen de détection de position radiale (2) délivrant une entrée audit moyen de modification de forme d'onde (4 ; 4a) représentant la position radiale instantanée dudit faisceau d'écriture par rapport audit disque (1), ledit moyen de modification de forme d'onde opérant en conformité avec ladite entrée provenant dudit moyen de détection de position radiale (2).

15. Circuit selon l'une quelconque des revendications 1 à 3, **caractérisé en ce que** ledit signal d'entrée impulsionnel dans ledit moyen de mise en forme d'onde (31) comprend un premier train de données et un second train de données, ledit faisceau d'écriture (15) enregistrant sélectivement ledit premier train de données et ledit second train de données comme dimensions variables de manière correspondante desdites discontinuités en surface dans une direction perpendiculaire à ladite surface de support d'enregistrement (1).

16. Circuit selon la revendication 15, **caractérisé en ce que** ledit support d'enregistrement est un disque (1) et lesdites positions sélectives sont en corrélation avec des rayons sélectifs correspondants du disque (1).

17. Circuit selon la revendication 15 ou la revendication 16, **caractérisé en ce que** lesdites discontinuités en surface sont des micros cuvettes formées comme une piste de micros cuvettes sur ladite surface d'enregistrement du support d'enregistrement (1), et ledit second train de données entraîne une modification des profondeurs des micro-cuvettes générée en réponse audit premier train de données.

18. Circuit selon la revendication 15 ou la revendication 16, **caractérisé en ce que** le fonctionnement dudit moyen de modification de forme d'onde est commandé, au moins en partie, par ledit second train de données.
